# FASCICULE DE BREVET EUROPEEN

(11) **EP 2 512 838 B1**
(45) Date de publication et mention de la délivrance du brevet: **12.03.2014**
(21) Numéro de dépôt: 10810851.5
(22) Date de dépôt: 20.12.2010
(51) Int. Cl.: B60C 23/04, H01Q 1/22, H05K 7/12

(54) **PROCEDE DE FABRICATION D'UN DISPOSITIF ELECTRONIQUE POUR PNEUMATIQUE**
VERFAHREN ZUR HERSTELLUNG EINER ELEKTRONISCHEN VORRICHTUNG FÜR EINEN LUFTREIFEN
METHOD OF MANUFACTURING AN ELECTRONIC DEVICE FOR A PNEUMATIC TYRE

(30) Priorité: 18.12.2009 FR 0959244
(43) Date de publication de la demande: 24.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ROBERT, Michel, F-63200 Cellule (FR)
(74) Mandataire: Dequire, Philippe Jean-Marie Denis
(86) Numéro de dépôt international: PCT/FR2010/052828
(87) Numéro de publication internationale: WO 2011/073601

(56) Documents cités:
- EP-A1- 1 589 614
- WO-A-99/53740
- WO-A1-94/18700
- US-A1- 2004 174 690
- US-A1- 2005 088 361

## Description

La présente invention concerne le domaine technique des pneumatiques.

Elle s'applique à tout type de pneumatiques pour véhicule. L'invention concerne plus particulièrement des pneumatiques destinés à équiper des véhicules à moteur de type tourisme, SUV (*"Sport Utility Vehicle"*)*,* deux roues, par exemple les motos, avions, tout comme des véhicules industriels choisis parmi les camionnette, les poids-lourd comme les métros, les bus, les engins de transport routier, par exemple les camions, les tracteurs, les remorques, et les véhicules hors la route tels que les engins agricoles ou de génie civil ou bien encore d'autres véhicules de transport ou de manutention.

Un pneumatique est fabriqué à partir d'un ensemble de produits semi-finis caoutchouteux sous forme de bandelettes, feuilles ou profilés, renforcés ou non, que l'on superpose les uns sur les autres pour former une ébauche crue de pneumatique. Une fois confectionnée, cette ébauche crue est vulcanisée dans un moule pour donner un pneumatique.

On connaît déjà dans l'état de la technique, notamment d'après EP 1 858 121, un pneumatique comprenant un dispositif électronique. Le dispositif électronique comprend un transpondeur passif connecté à une antenne dipôle constituée de deux brins permettant de communiquer par ondes radiofréquence, avec une unité d'interrogation externe. Ce type de transpondeur est généralement désigné par le sigle anglais RFID. Un tel dispositif peut stocker des données, par exemple, relatives à l'identification du pneumatique. Le dispositif électronique est positionné dans l'ébauche crue à une interface entre deux nappes de gomme, puis noyé dans la gomme au cours de la vulcanisation du pneumatique.

Le dispositif comprend un support PCB (Printed Circuit Board) comprenant une partie de fixation du transpondeur. Le support comprend également une partie de fixation pour chacun des brins de l'antenne. Pour fabriquer le dispositif, on positionne sur les parties de fixation du support le transpondeur et une extrémité de chacun des deux brins de l'antenne puis on réalise les connexions électriques par soudures entre ces différents composants.

En outre, une fois noyé dans la gomme du pneumatique vulcanisé, le dispositif électronique est soumis aux déformations locales dues au roulage du pneumatique. Ces déformations locales engendrent des contraintes au voisinage de l'interface. En raison de ces contraintes, on observe des cassures des brins, notamment au niveau de la jonction entre le brin et le support. Or, ces brins cassés présentent des arêtes ou des extrémités saillantes pouvant nuire à l'endurance mécanique du pneumatique et à la sécurité de son utilisateur.

On connait également dans l'état de la technique d'autres documents de brevet, en particulier les demandes WO 99/53740A, EP 1589614A1, et WO 94/18700A1, décrivant des dispositifs pour encapsuler un dispositif électronic et/ou le fixer sur un support.

Le but de l'invention est d'améliorer l'endurance mécanique et la sécurité de l'utilisateur d'un pneumatique comprenant un dispositif électronique.

A cet effet, l'invention a pour objet un dispositif électronique destiné à être intégré dans un pneumatique comprenant un organe électronique, au moins un conducteur et un support de l'organe électronique, le support et le conducteur étant reliés entre eux par une partie de fixation du support et une partie de fixation du conducteur, le dispositif comprenant de plus:
- un boîtier de rigidification surmoulant au moins la partie de fixation du support et la partie de fixation du conducteur,
- au moins une couche intermédiaire de transition surmoulant au moins en partie le boîtier de rigidification.

Grâce au boîtier de protection, on assure le maintien de chaque conducteur sur le support. La fixation de chaque conducteur est donc rendue plus fiable. En outre, même en cas de défaillance de la fixation entre le conducteur et le support, le boîtier permet d'assurer d'une part, leur maintient, et d'autre part, la connexion électrique entre eux via le support.

De préférence, le boîtier est réalisé dans un matériau de rigidité très supérieure à celle de la gomme du pneumatique dans lequel le dispositif est destiné à être intégré. Ce matériau est compatible avec chaque conducteur et le support est moulable par injection. Le matériau dans lequel est moulé le boîtier est également compatible avec la température de vulcanisation (entre 160 et 200°C) et la durée de cuisson (environ 10 min pour un pneumatique de véhicule léger). En outre, le matériau du boîtier est compatible avec les températures d'utilisation du pneumatique (entre -40 et +100 °C). Enfin, le matériau ne se dégrade pas au cours du temps.

Le matériau de la couche intermédiaire de transition présente une rigidité intermédiaire entre la rigidité du boîtier et la rigidité de la gomme du pneumatique dans lequel le dispositif est destiné à être intégré. La rigidité est caractérisée, par exemple, par le module d'allongement à 10 % du matériau considéré.

D'une manière générale, une interface de matériaux présentant des rigidités différentes forme une zone critique. Ainsi, lors du roulage du pneumatique, chacun des matériaux dont la jonction définit l'interface est soumise à des contraintes. Ces contraintes donnent lieu à des déformations différentes dépendant de la nature et de l'orientation des matériaux dont la jonction définit l'interface. Ces différences de déformations sont à l'origine de forces de cisaillement à l'interface, d'où le caractère critique de l'interface entre ces différents matériaux. En diminuant ces différences, on améliore donc l'endurance mécanique des connexions électriques entre l'antenne, le support et l'organe électronique améliorant ainsi la fiabilité globale du dispositif dans le pneumatique.

La couche intermédiaire de transition permet d'assurer une variation progressive de la rigidité entre le support et le conducteur, le boîtier de protection et la gomme du pneumatique. Ainsi, l'interface entre le dispositif et les nappes de gomme est d'autant moins critique que la différence de rigidité entre le dispositif et les nappes de gomme est faible.

La couche intermédiaire de transition est réalisée dans un matériau moins rigide que celui du boîtier de protection. Ce matériau est compatible avec le matériau du boîtier de protection, est moulable par injection et est compatible avec les températures de cuisson et d'utilisation du pneumatique. Enfin, ce matériau ne se dégrade pas au cours du temps.

Avantageusement, le boîtier de rigidification surmoule entièrement le support et l'organe électronique.

Selon des caractéristiques optionnelles du dispositif:
- Le module d'élasticité du matériau du boîtier de rigidification est supérieur ou égal à 1000 MPa.
- Le module d'allongement à 10% du matériau de la couche de transition est compris entre 20 et 80 MPa.

Avantageusement, le dispositif comprend au moins une couche d'interface surmoulant au moins en partie la couche intermédiaire de transition.

La couche d'interface permet de réduire davantage la différence de rigidité entre le dispositif et la gomme du pneumatique. On améliore ainsi la progressivité de la transition de rigidité entre, d'une part, l'organe électronique et les conducteurs et, d'autre part, la gomme du pneumatique.

La couche d'interface est réalisée dans un matériau moins rigide que celui de la couche intermédiaire. Ce matériau est compatible avec le matériau de la couche intermédiaire, est moulable par injection et est compatible avec les températures de cuisson et d'utilisation du pneumatique. En outre, ce matériau est compatible avec la gomme de l'ébauche crue et avec la gomme vulcanisée, notamment en termes d'adhésion, de propriétés mécaniques et d'évolution au cours du temps.

De préférence, le module d'allongement à 10% du matériau de la couche d'interface est inférieur à 10 MPa.

Avantageusement, le boîtier de rigidification comporte des moyens de centrage du dispositif dans une cavité de surmoulage de la couche intermédiaire de transition.

Ces moyens de centrage permettent également de maîtriser la régularité de l'épaisseur de la couche intermédiaire de transition. Ainsi, l'épaisseur est constante autour du conducteur ce qui permet d'obtenir un rayonnement homogène du conducteur et donc plus efficace. En outre, cela permet d'assurer une transition progressive de rigidité homogène pour tout le conducteur et l'organe électronique ce qui améliore l'endurance mécanique du pneumatique.

Enfin, le boîtier intégrant les moyens de centrage du dispositif, il est inutile de prévoir des moyens externes de centrage lors de la fabrication du dispositif.

De préférence, le boîtier de protection comprend des moyens de protection de chaque conducteur comprenant deux tétons agencés selon une forme générale en V de part et d'autre de la partie de fixation du conducteur au support.

Avantageusement, les moyens de centrage du dispositif dans la cavité de surmoulage de la couche intermédiaire de transition comprennent ces tétons. Les moyens de protection coopèrent avec l'enrobage pour limiter l'amplitude des déformations auxquelles est soumise la gomme environnante et qui sont transmises au dispositif électronique. La géométrie en V permet une limitation progressive de l'amplitude. En effet, la distance entre chaque téton et le conducteur augmente en s'éloignant de la partie de fixation ce qui permet d'absorber des déformations importantes loin de la partie de fixation et des déformations plus faibles près de la partie de fixation. On réduit ainsi la fatigue du conducteur dans la partie de fixation du conducteur au support ce qui réduit les risques de cassure du conducteur.

Dans un mode de réalisation, le dispositif comprend plusieurs couches intermédiaires de transition.

De préférence, chaque couche intermédiaire de transition 30 présente un module d'allongement à 10% supérieur au module d'allongement à 10% de la couche de transition 30 qu'elle recouvre.

Ainsi, on assure une transition progressive de la rigidité entre le boîtier de rigidification et la gomme dans lequel est destiné à être intégré le dispositif.

L'invention a également pour invention un procédé de fabrication d'un dispositif tel que défini ci-dessus dans lequel:
- on surmoule au moins la partie de fixation du support et la partie de fixation du conducteur,
- après l'étape de surmoulage du boîtier de rigidification, on surmoule au moins en partie le boîtier de rigidification d'une couche intermédiaire de transition.

Avantageusement, après l'étape de surmoulage de la couche intermédiaire de transition, on surmoule la couche intermédiaire de transition au moins en partie d'une couche d'interface.

De préférence, on fixe l'organe électronique à un précurseur d'un support de l'organe électronique, on fixe chaque conducteur au précurseur du support de sorte que chaque conducteur et l'organe électronique sont reliés électriquement via le précurseur du support et on sépare du précurseur du support chaque conducteur, l'organe électronique et le support reliant électriquement chaque conducteur et l'organe électronique.

Le procédé de fabrication du dispositif électronique est donc simple et automatisable, offrant ainsi une fiabilité accrue à moindre coût. En effet, afin que les liaisons électriques soient fonctionnelles, il est nécessaire de positionner très précisément chaque conducteur et l'organe sur les parties de fixation correspondantes qui sont électriquement reliées les unes aux autres. On peut ainsi facilement obtenir un positionnement fiable de l'organe électronique et de chaque conducteur les uns par rapport aux autres. En effet, le précurseur du support est conçu de telle sorte qu'il permet un positionnement précis du précurseur du support par rapport à une installation automatique de pose de l'organe électronique et de chaque conducteur ce qui garantit le positionnement relatif de chaque composant du dispositif. De façon optionnelle, le précurseur du support intègre des logements pour chaque composant ce qui améliore le positionnement des composants.

De préférence, on connecte électriquement l'organe électronique et chaque conducteur, par exemple par soudure, sertissage, clipsage, collage ou tout autre moyen.

Une fois le support séparé du reste du précurseur du support, l'organe et chaque conducteur sont toujours électriquement reliés entre eux via le support. Le support forme une partie sacrificielle du précurseur du support. Enfin, le précurseur du support permet de positionner relativement simplement le support dans des moyens automatisés de dépose de chaque conducteur et de l'organe électronique. Une fois l'organe électronique et chaque conducteur fixé au support, le support portant chaque conducteur et l'organe électronique peut être séparée du précurseur du support.

Le précurseur du support assure donc une fonction de positionnement des différents composants entre eux et une fonction de connexion électrique entre eux grâce au support.

Le support permet également de conférer de la rigidité au dispositif une fois celui-ci séparé du précurseur du support. En outre, le boîtier de protection permet de compenser la perte de rigidité liée à la séparation du support du précurseur du support.

En outre, dans le dispositif de l'état de la technique, le support PCB comprend généralement plusieurs couches qui, sous l'effet des contraintes, se séparent les unes des autres par délamination. La délamination entraîne alors un dysfonctionnement électrique du dispositif de l'état de la technique. En utilisant un support non-laminé, par exemple mono-couche métallique, on évite une éventuelle délamination du support.

Avantageusement, le support comprend au moins deux parties de fixation de l'organe électronique, le précurseur du support étant agencé de sorte que:
- avant l'étape de séparation, les deux parties de fixation de l'organe électronique sont en court-circuit via le précurseur du support, et
- après l'étape de séparation, les deux parties de fixation de l'organe électronique sont en circuit ouvert.

Afin d'apporter de la rigidité au dispositif et de permettre un positionnement relativement précis de l'organe et des conducteurs, les parties de fixation de l'organe sont reliées via le précurseur du support et donc sont en court-circuit avant la séparation du support.

Une fois l'organe et chaque conducteur fixé au support et une fois celui-ci séparé, les deux parties de fixation de l'organe doivent être en circuit ouvert afin de permettre le fonctionnement du dispositif.

Avantageusement, on met en forme plusieurs précurseurs de plusieurs supports par emboutissage et cambrage d'une bande métallique.

La présente demande concerne également un précurseur d'un support pour dispositif électronique destiné à être intégré dans un pneumatique comprenant un organe électronique et au moins un conducteur, comprenant un support comprenant:
- au moins une partie de fixation de l'organe électronique;
- au moins une partie de fixation de chaque conducteur, reliée électriquement à au moins une partie de fixation de l'organe électronique via le précurseur d'un support;
le précurseur d'un support étant agencé de sorte que le support est séparable du précurseur du support par emboutissage et/ou découpage.

Optionnellement, le précurseur du support est agencé de sorte que:
- les deux parties de fixation de l'organe électronique sont en court-circuit via le précurseur du support lorsque le support est solidaire du précurseur du support; et
- les deux parties de fixation de l'organe électronique sont en circuit ouvert lorsque le support est séparé du précurseur du support.

L'invention a pour autre objet un pneumatique comprenant un dispositif tel que défini ci-dessus.

Avantageusement, le module d'allongement à 10% du matériau de la couche d'interface est inférieur ou égal au module d'allongement à 10% de la gomme dans laquelle est noyé le dispositif.

L'invention sera mieux comprise à la lecture de la description qui va suivre, donnée uniquement à titre d'exemple non limitatif et faite en se référant aux dessins dans lesquels :
- la figure 1 est une vue en perspective d'un pneumatique selon l'invention avec des arrachements ;
- la figure 2 illustre un dispositif selon un premier mode de réalisation de l'invention;
- les figures 3 à 6 illustrent le dispositif de la figure 2 lors d'étapes de son procédé de fabrication;
- les figures 7 à 12 illustrent différentes étapes de fabrication du dispositif de la figure 2;
- la figure 13 est une vue analogue à celle de la figure 2 d'un dispositif selon un deuxième mode de réalisation de l'invention;
- les figures 14A à 14C représentent différents modes de réalisation d'un support du dispositif selon l'invention.

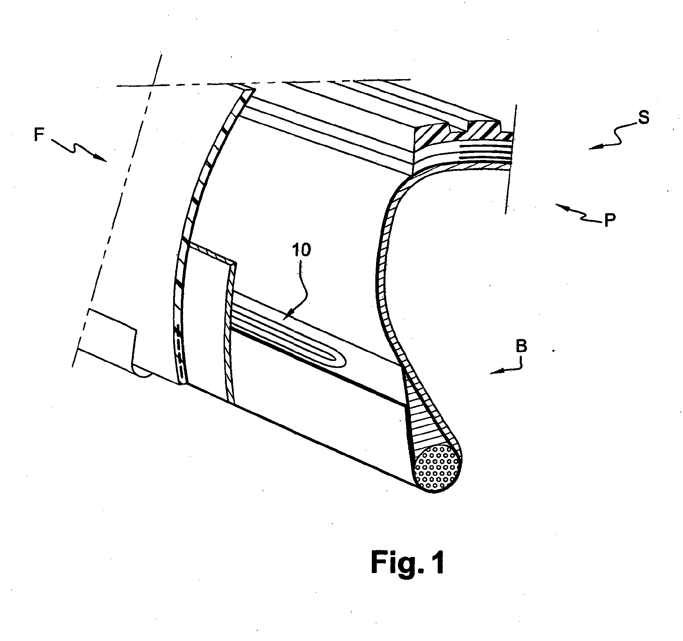

On a représenté sur la figure 1 un pneumatique selon l'invention désigné par la référence générale P.

De façon classique, le pneumatique P comprend un sommet S prolongé par deux flancs F et deux bourrelets B. Un seul flanc F et un seul bourrelet B sont représentés sur les figures. Les caractéristiques connues du sommet S, de chaque flanc F et de chaque bourrelet B sont décrites en détails dans la demande publiée sous le numéro FR 2 914 585 incorporée ici par référence. Plus particulièrement, le bourrelet B comprend également un dispositif selon l'invention désigné par la référence générale 10.

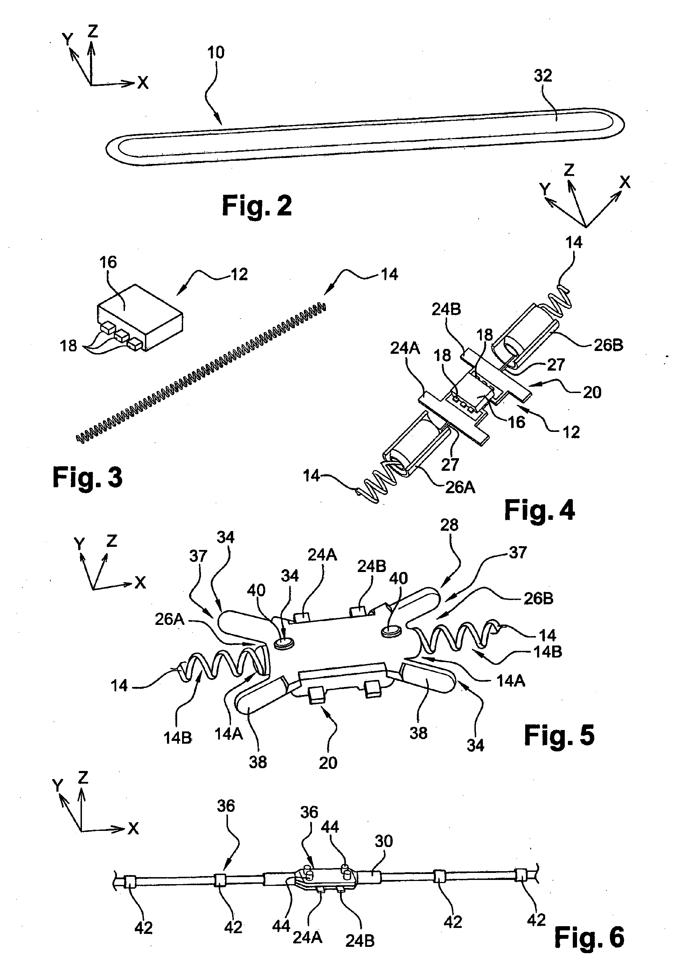

On a représenté sur la figure 2 le dispositif électronique 10 selon un premier mode de réalisation.

Comme illustré sur les figures 3 et 4, le dispositif 10 comprend un organe électronique 12 ainsi que deux conducteurs 14, ici deux antennes 14, formant dipôle. L'organe électronique 12 comprend une puce 16 de type RFID comportant des broches 18 de fixation de la puce 16 sur un support 20 du dispositif 10. Chaque conducteur 14 est sensiblement rectiligne et présente une forme hélicoïdale définissant la direction axiale X du dispositif 10. Sur les figures, on a représenté des axes X, Y, Z orthogonaux entre eux correspondant aux orientations axiale (X), transversale (Y) et verticale (Z) du dispositif 10.

Le support 20, qui a été séparé d'un précurseur 22 du support 20, comprend deux parties 24A, 24B de fixation de l'organe électronique 12 au support 20 ainsi que deux parties 26A, 26B de fixation de chaque conducteur 14 au support 20. Chaque conducteur 14 comprend une partie proximale 14A de fixation à chaque partie 26A, 26B et une partie distale 14B de rayonnement. Chaque conducteur 14 et le support 20 sont reliés par les parties 14A et 26A, 26B. Chaque partie 26A, 26B est reliée électriquement à chaque partie 24A, 24B de fixation de l'organe électronique par une partie de jonction 27 du support 20. Les deux parties 24A, 24B de fixation de l'organe électronique 12 sont en circuit ouvert lorsque le support 20 est séparée du précurseur du support 22.

En référence à la figure 5, le dispositif 10 comprend un boîtier de rigidification 28. Le boîtier 28 est surmoulé directement sur l'organe électronique 12, les conducteurs 14 et le support 20. En l'espèce, le boîtier 28 surmoule entièrement et directement l'organe électronique 12, le support 20, chaque partie de fixation 24A, 24B, 26A, 26B, chaque partie de jonction 27 et chaque partie proximale de fixation 14A de chaque conducteur 14. En particulier, le boîtier 28 surmoule la jonction formée par les parties de fixation 26A, 26B du support 20 et la partie de fixation 14A de chaque conducteur 14.

Comme représenté sur les figures 2 et 6, le dispositif 10 comprend au moins une couche intermédiaire 30 de transition et une couche 32 d'interface avec la gomme du pneumatique dans lequel le dispositif 10 est noyé. En l'espèce, le dispositif 10 comprend une seule couche intermédiaire 30. La couche intermédiaire 30 est surmoulée directement sur le boîtier 28 et sur chaque partie distale 14B de chaque conducteur 14A. La couche intermédiaire 30 surmoule ici entièrement le boîtier 28. En variante, le dispositif 10 comprend plusieurs couches intermédiaires de transition 30. La couche d'interface 32 est surmoulée directement sur la couche intermédiaire 30 la plus externe. La couche d'interface 32 surmoule ici entièrement la couche de transition 30.

Comme illustré sur la figure 5, le boîtier 28 comprend des moyens 34 de centrage du dispositif 10 dans une cavité de surmoulage de la couche intermédiaire 30. La couche intermédiaire 30 comprend également des moyens 36 de centrage du dispositif 10 dans une cavité de surmoulage de la couche d'interface 32. Le boîtier 28 comprend enfin des moyens 37 de protection de chaque conducteur 14.

Les moyens 37 sont mutualisés avec les moyens 34. En effet, les moyens 34 et 37 comprennent des tétons 38 agencés selon une forme générale en V transversalement de part et d'autre de chaque partie de fixation 26A, 26B. Ces tétons 38 permettent le positionnement axial et transversal du boîtier 28 et donc du dispositif 10 dans une cavité de surmoulage de la couche intermédiaire 30. Les moyens 34 comprennent en outre des butées 40 agencés sur le boîtier 28 verticalement de chaque côté de ce dernier.

Les moyens 36 comprennent des butées 42 surmoulées sur chaque partie 14B de chaque conducteur 14 ainsi que des tétons 44 surmoulés sur le boîtier 28.

Le boîtier 28 est réalisé dans un matériau plastique thermodurcissable à base, à titre d'exemple, de résines époxydes, de polymères cristaux liquides (LCP) ou de polybutylène téréphthalate (PBT). Ce boîtier 28 est très rigide, ce qui est rendu possible grâce à l'utilisation de ces matériaux thermodurcissables. La réticulation peut être réalisée pendant et/ou après l'opération d'injection du matériau de surmoulage du boîtier sans nécessiter de post-cuisson. Après réticulation complète et séparation du support 20 du précurseur du support 22, le boîtier 28 doit résister à l'ensemble des sollicitations mécaniques subies par le dispositif lors de l'utilisation du pneumatique sans déformation notable pour garantir un bon fonctionnement électronique des connexions électriques entre l'organe électronique 12, les conducteurs 14 et le support 20. Le module d'élasticité du matériau dans lequel est réalisé le boîtier 28 est supérieur ou égal à 1000 MPa.

Chaque couche intermédiaire 30 et d'interface 32 est de préférence réalisée dans un matériau thermoplastique tel que les élastomères thermoplastiques ou TPE, par exemple des copolymères blocs styrène/ butadiène (SB), styrène/ butadiène/ styrène (SBS), styrène/ isoprène (SI), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS), polyuréthanes thermoplastiques (TPU), TPV tel que PP/EPDM-VD, et leurs mélanges. Ces matériaux doivent être compatibles chimiquement et bien adhérer avec les matériaux adjacents.

Chaque matériau de chaque couche de transition 30 présente un module d'allongement à 10% compris entre 20 et 80 MPa. Dans le cas où le dispositif 10 comprend plusieurs couches de transition 30, chaque couche de transition 30 présente un module d'allongement à 10% supérieur au module d'allongement à 10% de la couche de transition 30 qu'elle recouvre ou surmoule.

Le module d'allongement à 10% du matériau de la couche d'interface 32 est inférieur ou égal au module d'allongement à 10% de la gomme dans lequel est noyé le dispositif 10. A titre d'exemple, le module d'allongement à 10% du matériau de la couche d'interface 32 est compris entre 1 et 10 MPa. Lorsque le dispositif 10 est positionné dans un bourrelet, comme c'est le cas du pneumatique P de la figure 1, le module d'allongement à 10% du matériau de la couche d'interface 32 est inférieur ou égal à 5 MPa. Lorsque le dispositif 10 est positionné dans un flanc, le module d'allongement à 10% du matériau de la couche d'interface 32 est inférieur ou égal à 2 MPa.

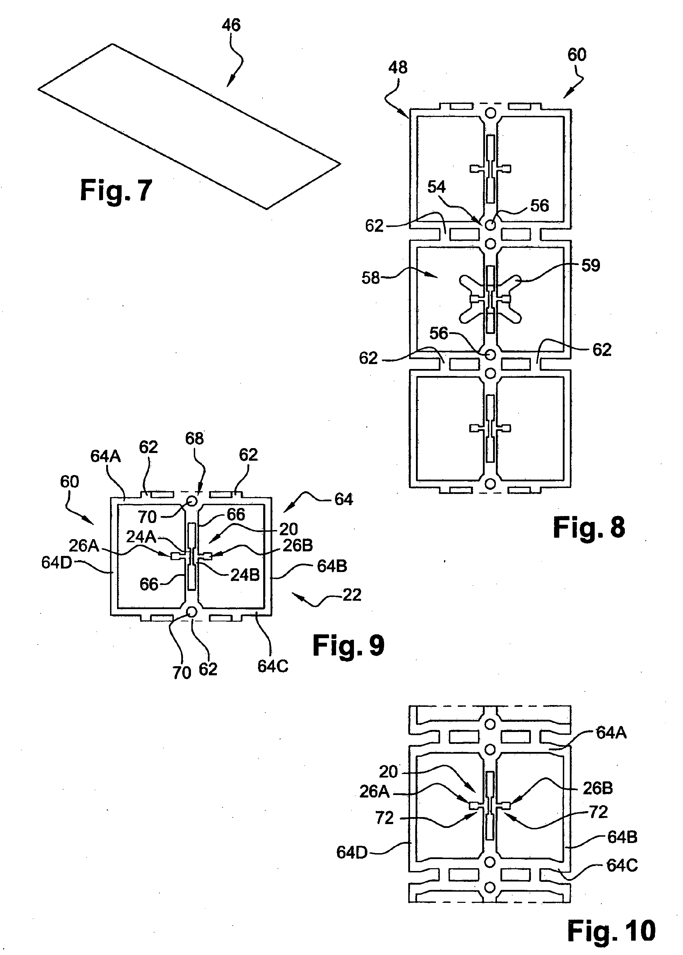

On va maintenant décrire un procédé de fabrication du dispositif 10 selon l'invention en référence aux figures 7 à 12.

On dispose d'un flanc métallique 46, par exemple sous la forme d'une bande de laiton traitée en surface comme illustrée sur la figure 7.

On met en oeuvre le procédé au moyen d'une installation 48 de fabrication du dispositif 10 illustrée en partie sur la figure 8. L'installation 48 comprend des moyens de guidage (non représentés) de la bande 46. Les moyens de guidage comprennent deux glissières dans laquelle la bande 46 est déplacée par glissement.

L'installation 48 comprend également des moyens d'emboutissage (non représentés) présentant un motif d'emboutissage au moyen desquels on emboutit périodiquement la bande. L'installation 48 comprend également des moyens de cambrage et de pliage de la bande 46 (non représentés).

L'installation 48 comprend également des moyens 54 de centrage et d'entrainement de la bande par rapport à l'installation 48. Ces moyens 54 comprennent des picots 56 alignés sensiblement au milieu entre les deux glissières.

Enfin, l'installation 48 comprend un moule 58 d'injection de moulage du boîtier 28 et des moyens de découpage du support 20 (non représentés). Le moule d'injection 58 comprend notamment une cavité 59 pour le moulage du boîtier 28.

On emboutit la bande 46 grâce aux moyens d'emboutissage et on obtient une bande 60 emboutie. Cette bande emboutie 60 comprend plusieurs précurseurs 22 de plusieurs supports identiques et reliés entre eux par des portions 62 de jonction.

En référence à la figure 9, chaque précurseur de support 22 comprend un cadre rectangulaire 64 comportant quatre branches 64A-D parallèles deux à deux. Deux branches du cadre, ici les branches 64A, 64C, sont reliées entre elles par une branche médiane 66 évidée dans sa partie centrale et sensiblement parallèle aux branches 64B, 64D. Le précurseur du support 22 comprend également le support 20 qui comprend les deux parties 24A, 24B de fixation de l'organe électronique 12 ainsi que les deux parties 26A, 26B de fixation de chaque conducteur 14. Sur la figure 9, les parties de fixation 26 sont encore planes et les deux parties 24A, 24B de fixation de l'organe électronique 12 sont en court-circuit via le précurseur du support 22 car le support 20 est solidaire du précurseur du support 22. De plus, le précurseur du support 22 comprend des moyens 68 de centrage de chaque précurseur du support 22 dans l'installation 48. Ces moyens 68 sont complémentaires des moyens 54 et comprennent deux orifices 70 ménagés à l'intersection de chaque branche 64A, 64C et de la branche médiane 66.

En référence à la figure 10, lors d'une étape ultérieure à l'étape d'emboutissage, on plie chaque partie 26A, 26B de façon à obtenir une gouttière 72. On cambre également le cadre 64 de sorte que le support 20 est surélevée par rapport aux branches 64B, 64D lorsque le précurseur du support repose sur les branches 64B, 64D.

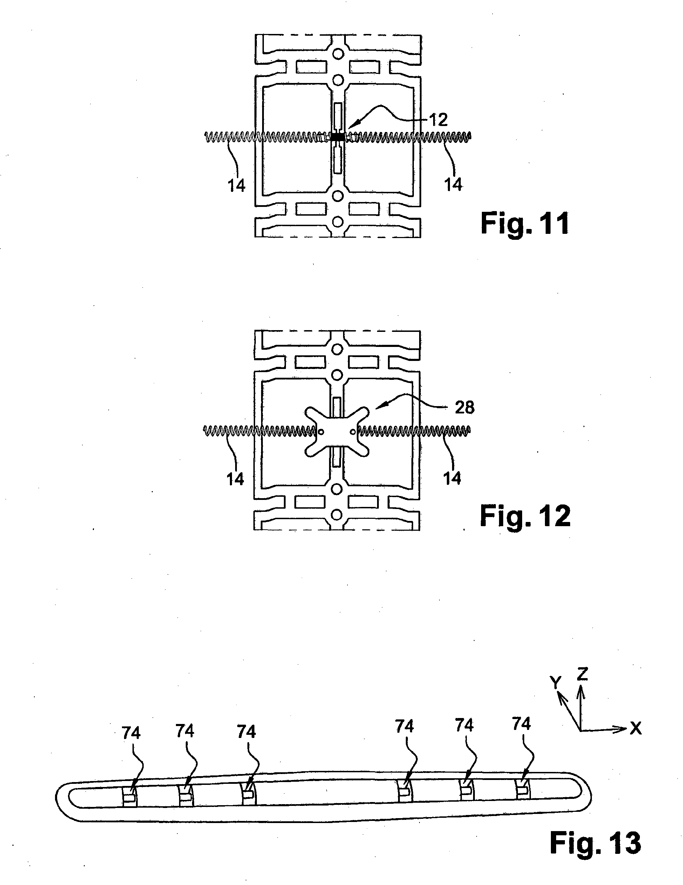

En référence à la figure 11, on fixe l'organe électronique 12 et chaque conducteur 14 respectivement sur les parties 24A, 24B et 26A, 26B du support 20. En l'espèce, on dépose une pâte à braser sur chaque partie 24A, 24B, 26A, 26B, puis on dépose chaque conducteur 14 et l'organe électronique 12, puis on fait fusionner la pâte à braser pour fixer et connecter électriquement chaque conducteur 14 et l'organe électronique 12 lors d'une étape de réfusion.

En référence à la figure 12, on surmoule l'organe électronique 12, le support 20 et chaque partie proximale de fixation 14A de chaque conducteur 14 par le boîtier 28 au moyen du moule 58.

Ensuite, on sépare le support 20 portant l'organe 12, les conducteurs 14 et le boîtier 28 de chaque précurseur du support 22 par découpage et/ou emboutissage du support 20, en l'espèce de chaque branche médiane 66 transversalement de part et d'autre du dispositif 10. On obtient alors un dispositif intermédiaire 10 tel que représenté sur la figure 5.

On positionne chaque dispositif intermédiaire 10 de la figure 5 dans un moule d'injection de la couche intermédiaire 30 et on surmoule la couche 30 sur le dispositif intermédiaire 10 de la figure 5. On obtient alors le dispositif intermédiaire de la figure 6.

Puis, on positionne chaque dispositif intermédiaire 10 de la figure 6 dans un moule d'injection de la couche d'interface 32 et on surmoule la couche 32 sur le dispositif intermédiaire 10 de la figure 6. On obtient alors le dispositif 10 de la figure 2.

On a représenté sur la figure 13 un dispositif 10 selon un deuxième mode de réalisation. Les éléments analogues à ceux représentés sur les figures précédentes sont désignés par des références identiques.

A la différence du premier mode de réalisation, les moyens 36 de centrage du dispositif 10 dans la cavité de surmoulage de la couche d'interface 32 ne sont pas portés par la couche intermédiaire 30 mais par le moule. Ces moyens 36 comprennent notamment des paires de demi-coquilles de positionnement (non représentés) du dispositif intermédiaire revêtu de la couche intermédiaire dans la cavité de moulage de la couche 32. Après retrait du dispositif 10 du moule, il subsiste des encoches 74 agencées le long de chaque partie distale 14B de chaque conducteur là où étaient disposées les coquilles de positionnement. Bien entendu, ces encoches ne subsistent pas lorsque les moyens de positionnement sont rétractables. Dans ce mode de réalisation, la couche 30 ne comporte donc pas nécessairement les tétons 42.

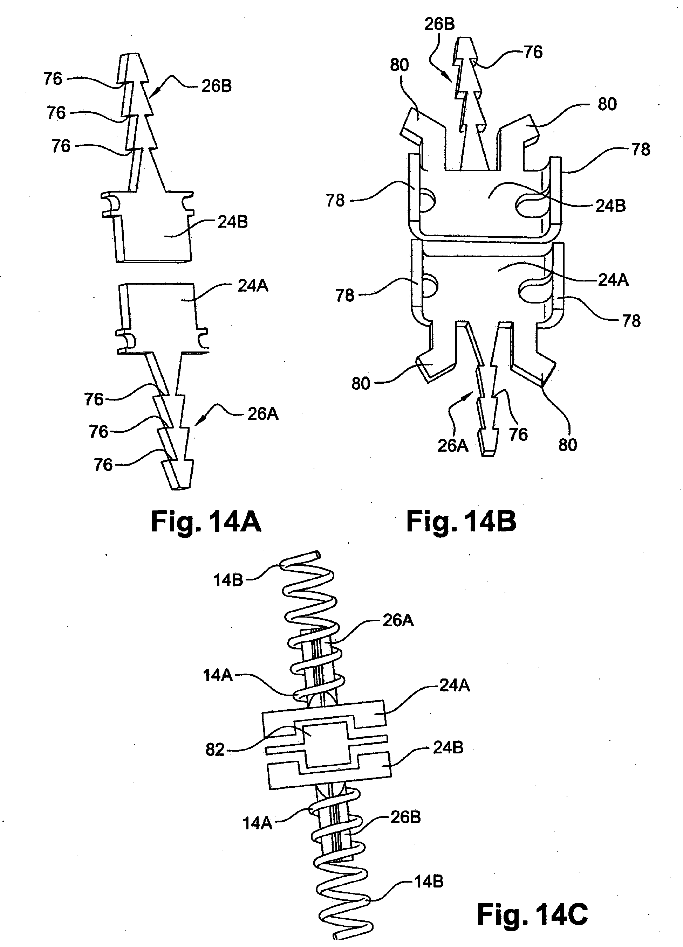

On a représenté sur les figures 14A-C différents modes de réalisation du support 20. Les éléments analogues à ceux représentés sur les figures précédentes sont désignés par des références identiques.

Sur la figure 14A, chaque partie de fixation 26A, 26B présente plusieurs ardillons 76 de retenue de chaque conducteur 14 sur chaque partie de fixation 26A, 26B.

Sur la figure 14B, en plus des ardillons 76 du mode de réalisation de la figure 14A, le support 20 comprend au moins un rebord 78 de protection de l'organe électronique 12, ici deux rebords disposés transversalement de part et d'autre de chaque partie 24A, 24B. En outre, le support 20 comprend des saillies 80 de support de chaque téton 38.

Sur la figure 14C, en plus des deux parties 26A, 26B de fixation de l'organe électronique 12, le support 20 comprend une partie 82 de support centrale de l'organe électronique 12 agencée entre les deux parties 26A, 26B et électriquement isolée de chaque partie 24, 26 lorsque le support est séparée du précurseur du support 22.

L'invention ne se limite pas aux modes de réalisation précédemment décrits.

En effet, les caractéristiques des différents modes de réalisation du support 20 pourront être indifféremment combinées.

En outre, l'étape de cambrage pourra être antérieure à l'étape de pliage et vice-versa.

De plus, le dispositif 10 pourra comprendre plus de trois couches afin d'améliorer la transition de rigidité entre l'organe électronique 12, les conducteurs 14 et la gomme du pneumatique.

L'organe électronique 12 pourra être du type passif, c'est-à-dire apte à communiquer des données comprises dans une puce électronique à une unité d'interrogation externe ou du type actif, c'est-à-dire apte à recevoir des données émises par un capteur afin de les communiquer à une unité d'interrogation externe. Un tel organe actif peut comprendre notamment un microprocesseur ainsi qu'une mémoire.

## Revendications

1. Dispositif électronique (10) destiné à être intégré dans un pneumatique comprenant un organe électronique (12), au moins un conducteur (14) et un support (20) de l'organe électronique (22), le support (20) et le conducteur (14) étant reliés entre eux par une partie (26A, 26B) de fixation du support (20) et une partie (14A) de fixation du conducteur (14), le dispositif comprenant de plus un boîtier de rigidification (28) surmoulant au moins la partie (26A, 26B) de fixation du support (20) et la partie (14A) de fixation du conducteur (14),
**caractérisé en ce qu'**il comprend au moins une couche intermédiaire (30) de transition surmoulant au moins en partie le boîtier de rigidification (28).

2. Dispositif selon la revendication précédente, dans lequel le boîtier de rigidification (28) surmoule entièrement le support (20) et l'organe électronique (12).

3. Dispositif (10) selon l'une quelconque des revendications précédentes, dans lequel le module d'élasticité du matériau du boîtier de rigidification (28) est supérieur ou égal à 1000 MPa.

4. Dispositif (10) selon l'une quelconque des revendications précédentes, dans lequel le module d'allongement à 10% du matériau de la couche de transition (30) est compris entre 20 et 80 MPa.

5. Dispositif (10) selon l'une quelconque des revendications précédentes, comprenant au moins une couche d'interface (32) surmoulant au moins en partie la couche intermédiaire de transition (30).

6. Dispositif (10) selon la revendication précédente, dans lequel le module d'allongement à 10% du matériau de la couche d'interface (32) est inférieur à 10 MPa.

7. Dispositif (10) selon l'une quelconque des revendications précédentes, dans lequel le boîtier de rigidification (28) comporte des moyens (34) de centrage du dispositif (10) dans une cavité de surmoulage de la couche intermédiaire (30) de transition.

8. Dispositif (10) selon l'une quelconque des revendications précédentes, dans lequel le boîtier de rigidification (28) comprend des moyens (37) de protection de chaque conducteur (14) comprenant deux tétons (38) agencés selon une forme générale en V de part et d'autre de la partie de fixation (26A, 26B) du conducteur (14) au support (20).

9. Dispositif (10) selon l'une quelconque des revendications précédentes, comprenant plusieurs couches intermédiaires de transition (30).

10. Dispositif (10) selon la revendication précédente, dans lequel chaque couche intermédiaire de transition 30 présente un module d'allongement à 10% supérieur au module d'allongement à 10% de la couche de transition 30 qu'elle recouvre.

11. Procédé de fabrication d'un dispositif (10) selon l'une quelconque des revendications précédentes, dans lequel:
- on surmoule au moins la partie (26A, 26B) de fixation du support (20) et la partie (14A) de fixation du conducteur (14) d'un boîtier de rigidification (28),
- après l'étape de surmoulage du boîtier de rigidification (28), on surmoule au moins en partie le boîtier de rigidification (28) d'une couche intermédiaire de transition (30).

12. Procédé selon la revendication 11, dans lequel après l'étape de surmoulage de la couche intermédiaire de transition (30), on surmoule la couche intermédiaire de transition (30) au moins en partie d'une couche d'interface (32).

13. Procédé selon la revendication 11 ou 12, dans lequel:
- on fixe l'organe électronique (12) à un précurseur du support (22) de l'organe électronique (12);
- on fixe chaque conducteur (14) au précurseur du support (22) de sorte que chaque conducteur (14) et l'organe électronique (12) sont reliés électriquement via le précurseur du support (22);
- on sépare du précurseur du support (22) chaque conducteur (14), l'organe électronique (12) et le support (20) reliant électriquement chaque conducteur (14) et l'organe électronique (12).

14. Pneumatique comprenant un dispositif (10) selon l'une quelconque des revendications 1 à 10.

15. Pneumatique selon la revendication précédente, dans lequel le module d'allongement à 10% du matériau de la couche d'interface (32) est inférieur ou égal au module d'allongement à 10% de la gomme dans laquelle est noyé le dispositif (10).

## Patentansprüche

1. Elektronische Vorrichtung (10), dazu bestimmt, in einen Luftreifen eingefügt zu werden, die ein elektronisches Organ (12), mindestens einen Leiter (14) und einen Träger (20) des elektronischen Organs (12) enthält, wobei der Träger (20) und der Leiter (14) durch einen Befestigungsteil (26A; 26B) des Trägers (20) und einen Befestigungsteil (14A) des Leiters (14) miteinander verbunden sind, wobei die Vorrichtung außerdem ein Versteifungsgehäuse (28) aufweist, das mindestens den Befestigungsteil (26A, 26B) des Trägers (20) und den Befestigungsteil (14A) des Leiters (14) überformt,
**dadurch gekennzeichnet, dass** sie mindestens eine Übergangszwischenschicht (30) enthält, die zumindest zum Teil das Versteifungsgehäuse (28) überformt.

2. Vorrichtung nach dem vorhergehenden Anspruch, wobei das Versteifungsgehäuse (28) den Träger (20) und das elektronische Organ (12) vollständig überformt.

3. Vorrichtung (10) nach einem der vorhergehenden Ansprüche, wobei der Elastizitätsmodul des Materials des Versteifungsgehäuses (28) höher als oder gleich 1000 MPa ist.

4. Vorrichtung (10) nach einem der vorhergehenden Ansprüche, wobei der Dehnungsmodul bei 10% des Materials der Übergangsschicht (30) zwischen 20 und 80 MPa liegt.

5. Vorrichtung (10) nach einem der vorhergehenden Ansprüche, die mindestens eine Schnittstellenschicht (32) enthält, welche zumindest zum Teil die Zwischenübergangsschicht (30) überformt.

6. Vorrichtung (10) nach dem vorhergehenden Anspruch, wobei der Dehnungsmodul bei 10% des Materials der Schnittstellenschicht (32) niedriger als 10 MPa ist.

7. Vorrichtung (10) nach einem der vorhergehenden Ansprüche, wobei das Versteifungsgehäuse (28) Einrichtungen (34) zur Zentrierung der Vorrichtung (10) in einem Überformungshohlraum der Übergangszwischenschicht (30) aufweist.

8. Vorrichtung (10) nach einem der vorhergehenden Ansprüche, wobei das Versteifungsgehäuse (28) Schutzeinrichtungen (37) jedes Leiters (14) enthält, die zwei Zapfen (38) enthalten, welche in einer allgemeinen V-Form zu beiden Seiten des Befestigungsteils (26A, 26B) des Leiters (14) am Träger (20) angeordnet sind.

9. Vorrichtung (10) nach einem der vorhergehenden Ansprüche, die mehrere Zwischenübergangsschichten (30) enthält.

10. Vorrichtung (10) nach dem vorhergehenden Anspruch, wobei jede Zwischenübergangsschicht (30) einen Dehnungsmodul bei 10% höher als der Dehnungsmodul bei 10% der Übergangsschicht (30) hat, die sie bedeckt.

11. Verfahren zur Herstellung einer Vorrichtung (10) nach einem der vorhergehenden Ansprüche, wobei:
- mindestens der Befestigungsteil (26A; 26B) des Trägers (20) und der Befestigungsteil (14A) des Leiters (14) mit einem Versteifungsgehäuse (28) überformt werden,
- nach dem Schritt des Überformens des Versteifungsgehäuses (28) das Versteifungsgehäuse (28) zumindest zum Teil mit einer Übergangszwischenschicht (30) überformt wird.

12. Verfahren nach Anspruch 11, wobei nach dem Schritt des Überformens der Zwischenübergangsschicht (30) die Zwischenübergangsschicht (30) zumindest zum Teil mit einer Schnittstellenschicht (32) überformt wird.

13. Verfahren nach Anspruch 11 oder 12, wobei:
- das elektronische Organ (12) an einem Vorläufer (22) des Trägers des elektronischen Organs (12) befestigt wird;
- jeder Leiter (14) am Vorläufer (22) des Trägers befestigt wird, so dass jeder Leiter (14) und das elektronische Organ (12) über den Vorläufer (22) des Trägers elektronisch verbunden sind;
- jeder Leiter (14) vom Vorläufer (22) des Trägers getrennt wird, wobei das elektronische Organ (12) und der Träger (20) jeden Leiter (14) und das elektronische Organ (12) elektrisch verbinden.

14. Luftreifen, der eine Vorrichtung (10) nach einem der Ansprüche 1 bis 10 enthält.

15. Luftreifen nach dem vorhergehenden Anspruch, wobei der Dehnungsmodul bei 10% des Materials der Schnittstellenschicht (32) niedriger als der oder gleich dem Dehnungsmodul bei 10% des Gummis ist, in den die Vorrichtung (10) eingebettet ist.

## Claims

1. Electronic device (10) intended to be incorporated into a tyre, comprising an electronic component (12), at least one conductor (14) and a support (20) for the electronic component (22), the support (20) and the conductor (14) being joined together by a part (26A, 26B) for attachment of the support (20) and a part (14A) for attachment of the conductor (14), the device additionally comprising a rigidifying casing (28) overmoulded at least over the part (26A, 26B) for attachment of the support (20) and the part (14A) for attachment of the conductor (14),
**characterized in that** it comprises at least one intermediate transition layer (30) at least partially overmoulded over the rigidifying casing (28).

2. Device according to the preceding claim, in which the rigidifying casing (28) is fully overmoulded over the support (20) and the electronic component (12).

3. Device (10) according to either one of the preceding claims, in which the elastic modulus of the material of the rigidifying casing (28) is greater than or equal to 1000 MPa.

4. Device (10) according to any one of the preceding claims, in which the 10% elongation modulus of the material of the transition layer (30) is between 20 and 80 MPa.

5. Device (10) according to any one of the preceding claims, comprising at least one interface layer (32) at least partially overmoulded over the intermediate transition layer (30).

6. Device (10) according to the preceding claim, in which the 10% elongation modulus of the material of the interface layer (32) is below 10 MPa.

7. Device (10) according to any one of the preceding claims, in which the rigidifying casing (28) comprises means (34) for centring the device (10) in an overmoulding cavity used for overmoulding the intermediate transition layer (30).

8. Device (10) according to any one of the preceding claims, in which the rigidifying casing (28) comprises means (37) of protecting each conductor (14) comprising two lugs (38) arranged in an overall V-shape on each side of the part (26A, 26B) for attachment of the conductor (14) to the support (20).

9. Device (10) according to any one of the preceding claims, comprising several intermediate transition layers (30).

10. Device (10) according to the preceding claim, in which each intermediate transition layer 30 has a 10% elongation modulus higher than the 10% elongation modulus of the transition layer 30 it covers.

11. Method of manufacturing a device (10) according to any one of the preceding claims, in which:
- at least the part (26A, 26B) for attachment of the support (20) and the part (14A) for attachment of the conductor (14) are overmoulded with a rigidifying casing (28),
- following the step of overmoulding the rigidifying casing (28), the rigidifying casing (28) is at least partially overmoulded with an intermediate transition layer (30).

12. Method according to Claim 11, in which after the step of overmoulding the intermediate transition layer (30), the intermediate transition layer (30) is at least partially overmoulded with an interface layer (32).

13. Method according to Claim 11 or 12, in which:
- the electronic component (12) is attached to a precursor of the support (22) of the electronic component (12);
- each conductor (14) is attached to the precursor of the support (22) such that each conductor (14) and the electronic component (12) are electrically connected via the precursor of the support (22);
- each conductor (14) is separated from the precursor of the support (22), the electronic component (12) and the support (20) electrically connecting each conductor (14) and the electronic component (12).

14. Tyre comprising a device (10) according to any one of Claims 1 to 10.

15. Tyre according to the preceding claim, in which the 10% elongation modulus of the material of the interface layer (32) is less than or equal to the 10% elongation modulus of the rubber in which the device (10) is embedded.
